(19) Europäisches Patentamt

European Patent Office

Office européen des brevets

(11) EP 4 492 300 A1

## (12) EUROPEAN PATENT APPLICATION

(43) Date of publication:
15.01.2025 Bulletin 2025/03

(21) Application number: 23211844.8

(22) Date of filing: 23.11.2023

(51) International Patent Classification (IPC):
$G06N\ 10/60^{(2022.01)}$

(52) Cooperative Patent Classification (CPC):
G06N 10/60

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.07.2023 EP 23185701

(71) Applicant: Kipu Quantum GmbH
76137 Karlsruhe (DE)

(72) Inventors:
• Gomez Cadavid, Alejandro
10405 Berlin (DE)
• Hegade, Narendra N.
10439 Berlin (DE)
• Füchsel, Gernot
14482 Potsdam (DE)
• Solano, Enrique
10405 Berlin (DE)

(74) Representative: Hoppe, Georg Johannes
Darani Anwaltskanzlei
Hohenzollerndamm 117
14199 Berlin (DE)

(54) **METHOD FOR SOLVING AN ELECTRONIC STRUCTURE PROBLEM BASED ON HYBRID DIGITIZED COUNTERDIABATIC QUANTUM COMPUTING**

(57)     The invention pertains to quantum computing. Specifically, the invention refers to a computer-implemented method for finding the ground state of a molecule with a quantum processor by using a quantum-classical Variational Quantum Eigensolver (VQE) method with the ground state corresponding to a Hamiltonian of the molecule,

the quantum processor comprising a predetermined quantum circuit for producing trial quantum states for the Hamiltonian operator, said predetermined quantum circuit comprising at least parametric quantum gates associated with one or more parameters to be optimized, the method comprising:

- providing an initial and final Hamilton operator, building up a pool of generators to construct an Ansatz of parametrized entanglers for the quantum circuit, and
- applying the quantum-classical VQE method to optimize the values of the parameters for finding the ground state of the Hamiltonian.

Figure 2

**Description**

The invention relates to quantum computing as described herein. Specifically, certain aspects of the invention are defined by the appended independent claims. Embodiments of the invention are defined in the dependent claims.

The invention also relates to computer-implemented method, in particular to a method for solving an electronic structure problem on a quantum computer. In particular embodiments, the method is based on hybrid digitized counter-diabatic quantum computing (Hybrid-DCQC).

**Short description of aspects of the invention**

This summary is provided to introduce a selection of concepts in a simplified form that are further described below in the detailed description. This summary is not intended to identify key features of the invention, nor is it intended to be used to limit the scope of the invention.

Quantum computing is a framework for computation, which aims at outperforming classical computation by exploiting quantum mechanical phenomena. In this regard, it is necessary to introduce a qubit, which is a basic unit of quantum information.

The qubit may be considered as the quantum analog of a classical bit. It is representative of a physical system that may be in two different states, generally denoted by $|0\rangle$ and $|1\rangle$, as well as in a superposition of those two states, e.g.,

$$\frac{(|0\rangle+|1\rangle)}{\sqrt{2}}$$

. This plays an important role in the development of quantum algorithms outperforming classical algorithms. One example of the physical device that may be used as a qubit is an electron spin.

Adiabatic quantum computing is a quantum computation paradigm based on the principles of adiabatic evolution. It is based on slowly varying a quantum system's Hamiltonian so that its ground state evolves to represent the solution to a particular problem.

The Variational Quantum Eigensolver (VQE) is an algorithm designed for noisy intermediate scale quantum (NISQ) computers. It's a hybrid quantum-classical method, which means it involves both quantum and classical computational steps. VQE is primarily used to find the ground state energy of a given Hamiltonian achieved by minimizing the expectation value of the Hamiltonian over a parameterized set of trial wavefunctions, which is essential in problems like simulating molecules in quantum chemistry.

Initial Hamiltonian is the Hamiltonian whose ground state is easily prepared and known. It acts as a starting point for the adiabatic evolution process.

Target Hamiltonian is the Hamiltonian representing the problem to be solved, and its ground state corresponds to the solution of the problem. In the context of VQE, the target Hamiltonian is the one representing the molecular system, whose ground state energy needs to be found.

Configuration Interaction (CI) is a method used in quantum chemistry to account for electron correlation effects by considering multiple electronic configurations (or determinants). In the context of the VQE, the Hamiltonian derived from a CI calculation can be used as the target Hamiltonian.

The Hartree-Fock (HF) method is a foundational procedure in quantum chemistry used to approximate the ground state of a quantum system, especially for atoms and molecules. It's a mean-field theory, which means that each particle (electron, in this case) moves under the average influence of all the other particles, rather than considering every pairwise interaction individually.

Atom-centered basis refer to the basis functions (often mathematical functions like atomic orbitals) that are centered on the atoms of the molecule. The most common types of atom-centered basis functions are Gaussian-type orbitals (GTOs) and Slater-type orbitals (STOs). These basis sets are constructed to approximate the behavior of electrons in atoms, and they are used to expand the molecular wavefunction in quantum chemical calculations.

Shortcuts to adiabaticity is a computational paradigm proposed to speed up Adiabatic evolution which can be infinitely slow for practical purposes using counterdiabatic driving. The concept behind counterdiabatic driving is to add an auxiliary Hamiltonian to the system such that the combined evolution is equivalent to the desired adiabatic process but achieved in a shorter time. This auxiliary Hamiltonian effectively counteracts the non-adiabatic transitions that would typically occur during a faster evolution.

Digitized counterdiabatic quantum computing provides a way to implement counterdiabatic driving in a digitized manner, using a sequence of quantum gates. The idea is to approximate the continuous time counterdiabatic evolution using a discrete set of operations, making it amenable to implementation on quantum hardware.

The objective of the invention is to provide a way for finding the ground state of a chemical molecule.

This objective is achieved by the features of the independent claims in the appended claims. Further embodiments and examples are apparent from the dependent claims, the detailed description, and the accompanying drawings of the figures.

The invention pertains in a fist aspect embodiment to a hybrid quantum-classical variational quantum eigensolver (VQE) to find the electronic ground state wavefunction for a given molecular electronic Hamiltonian which can also be referred to as the target or the problem Hamiltonian and determine the associated ground state energy.

The invention starts initially from a Hartree-Fock ground state which is easy to prepare on a quantum device. It constructs an Ansatz (initial state) for the quantum circuit by representing the evolution operator using parametrized entanglers. The generators (which are the building blocks of the entangler) are pre-computed using a nested-commutator approach and ranked according to their energy gradients with respect to corresponding amplitude. The optimized parameters are iteratively obtained by performing several variational quantum eigensolver (VQE) cycles.

The eigensolver approach first pre-computes a pool of generators (possibly including generators with Z-Gates) from which the generators are then selected to build the circuit Ansatz. This also allows for the application of selection criteria other than the gradient selection.

Our invention allows for an efficient and accurate determination of electronic ground states and energies of molecules using quantum devices.

The method may comprise the following steps in certain embodiments:

1. The electronic ground state of a given molecular Hamiltonian which is the target Hamiltonian is computed using a quantum computer.

2. The method used adiabatic quantum computing, which is speeded up by using counter-diabatic (CD) terms. These terms can suppress excitation during the system's evolution.

3. An initial Hamiltonian is provided, which is the Hartree-Fock (HF) operator. For that, first a classical Hartree-Fock calculation is performed at a defined molecular geometry using a classical computer device. The output are the optimized spin-orbitals, which are linear combinations of atom-centered basis functions. Using these spin-orbitals, one can construct the Hartree-Fock operator (initial Hamiltonian) and a Configuration Interaction (CI) Hamiltonian (the target Hamiltonian $H_f$). The CI Hamiltonian can be any variant, that is, the CI expansion may be full or truncated due to the use of an active space and/or use of a reduce number of allowed excitations. Both Hamiltonians are written in certain embodiments in second-quantized form and translated to the qubit k-local form using a fermion-to-qubit mapping method.

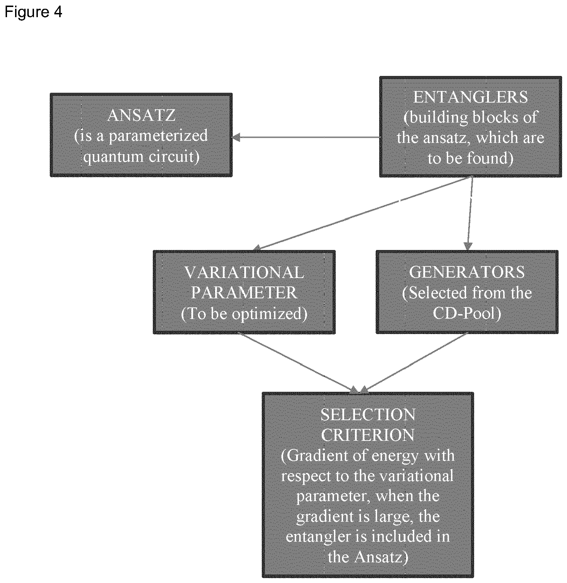

4. Knowing target and initial Hamiltonians, the counter-diabatic (CD) terms are computed from the nested commutator up to first order. In other embodiments, the method is not limited to the first order and can include a complete expansion. The CD-terms form a pool of generators from which a parametrized circuit Ansatz is constructed (see the diagram of figure 4 and item 6 below for further details).

5. Next is solving the following problem by variationally optimizing the parameters $\alpha_i$, so that the energy gradient

$$\left.\frac{dE}{d\alpha_i}\right|_{\alpha_i=\alpha_i^*} = 0$$

minimizes for all parameters (this is the convergence criterion of the optimization), where $\theta^*$ are the optimal parameters, and $E = \langle HF| \prod_k e^{i\alpha k P_k} H_f \prod_k e^{-i\alpha k P_k} |HF\rangle$ , $P_i$ are the generators/operators/CD-terms, $e^{i\alpha k P_k}$ are entanglers (see figure 4), and $|HF\rangle$ is the Hartree-Fock state.

6. For constructing the Ansatz (i.e. a product of entanglers), a reduced number of CD-terms (also called operators or generators) is chosen from the pool. In certain embodiments those generators are chosen according to the gradient of the energy with respect to the variational parameter, namely when $\left.\frac{dE}{d\alpha_i}\right|_{\alpha_i=0}$ is maximal. Other selection criteria, which are not based on the gradient can also be applied in certain embodiments of the invention. Using the complete pool of CD-terms constructed from the full expansion of the nested commutator will yield the ground state of the target Hamiltonian in an exact manner.

In one aspect, the invention refers to a computer-implemented method for finding the ground state of a molecule with a quantum processor by using a quantum-classical Variational Quantum Eigensolver (VQE) method with the ground state corresponding to a target Hamiltonian of the molecule,
the quantum processor comprising a predetermined quantum circuit for producing trial quantum states for the target Hamiltonian operator, the predetermined quantum circuit comprising parametric quantum gates associated with one or more parameters to be optimized.

In certain embodiments, the method comprises:

- providing an initial Hamiltonian operator,
- computing a pool of generators to construct parametrized entanglers for the quantum circuit, and
- applying the quantum-classical VQE method to optimize the values of the parameters of the entanglers for finding the target Hamiltonian representing the ground state (an energy expectation value) of the molecule.

In certain embodiments of the method, the provided initial Hamiltonian operator is represented in an atom-centered basis.

In certain embodiments of the method, the step of applying the quantum-classical VQE method is part of an iterative scheme in which the quantum processor is used in conjunction with a classical (non-quantum) processor, the quantum processor preparing a trial quantum state for the target Hamiltonian operator and performing measurements representative of the energy or expectation value associated with the target Hamiltonian operator for said trial quantum state, and

the classical processor updating values of the parameters of the parametric quantum gates of the predetermined quantum circuit based on the measurements performed by the quantum processor, the iterative scheme being executed until a predefined stopping criterion is satisfied, the quantum-classical VQE method returning the optimized values of the parameters.

In certain embodiments of the method, the predefined stopping criterion is a maximum number of iterations and/or a change of the energy associated with a parameterized wavefunction (such as a trial quantum state) of two or more consecutive iterations.

In certain embodiments of the method, the parametric quantum gates comprise rotation quantum gates, and wherein the parameters associated with said rotation quantum gates comprise values of angles.

In certain embodiments of the method, the quantum-classical VQE computes a pool of generators comprising generators with Z-Gates.

In certain embodiments of the method, the generators are selected using a gradient method wherein a gradient of an energy functional in reference state representation, in particular the Hartree Fock state, is computed with respect to the variational parameter from the computed pool of generators.

In certain embodiments of the method, the target Hamiltonian operator represents an energy or expectation value of the ground state of the molecule, the optimal quantum state corresponding to the eigenvector associated with the lowest eigenvalue. An expectation value of the target Hamiltonian operator over a given quantum state corresponds to the energy of said quantum state.

In certain embodiments of the method, the predetermined quantum circuit comprises a plurality of qubits, wherein the number of qubits in the predetermined quantum circuit corresponds to a number of spin orbitals used to describe the molecule.

In another aspect, the invention refers to the use of a method according to any of claims 1 to 9 for determining a physical property of a material, in particular wherein the physical property is selected from the group consisting of magnetic properties, electrical properties and optical properties.

In another aspect, the invention refers to a computer-implemented method for providing a hybrid quantum-classical Variational Quantum Eigensolver (VQE). This method may comprise any of the following steps:

   a. building a pool of generators from a nested commutator, comprising

      calculating a Hartree-Fock operator for a given molecular Hamiltonian (target Hamiltonian) using a classical computer which yields an initial Hamiltonian, and

      obtaining a plurality of counterdiabatic (CD) terms using a digitized counterdiabatic quantum computing involving a nested commutator method to obtain a pool of generators,

   b. ranking the generators of the pool of generators according to their associated first derivative of the energy functional,

   c. Preparing a Hartree-Fock state, which is used as a reference state when ranking the generators,

   d. providing a plurality of parametrized single qubit rotations comprising a layer as a first block. (A layer is a group of quantum gates meant to achieve a defined task, which is distinguished and may be applied several times along the quantum circuit)

   e. providing a plurality of parametrized entanglers (each of which may comprise a layer) in accordance with the generators selected from the pool of generators, which have the largest absolute value of the energy gradient with respect to a derivative criterion as a second block. The parametrized entanglers are quantum gates, which are built from generators which are chosen from the pool of generators, using a criterion called derivative criterion.

   f. Computing the expectation value of the Hamiltonian, wherein the optimized parameters are iteratively obtained by performing several Variational Quantum Eigensolver (VQE) cycles, and

g. using a classical computer as an optimizer to update the parameters and returning to step d. with the updated parameters until a stop criterion is reached. A stop criterion may be defined to be an energy difference between two consecutive iterations.

In another aspect, the invention refers to a method of claim 11, wherein the pool of generators built from the nested commutator in step a. is pool of generators obtained from the first order nested commutator according to $[H_{HF}, H_{mol}]$.

In another aspect, the invention refers to a data processing apparatus/device/system comprising a processor configured to perform the steps of the methods described herein.

In another aspect, the invention refers to a computer program [product] comprising instructions which, when the program is executed by a computer, cause the computer to carry out [the steps of] the methods described herein.

In another aspect, the invention refers to a computer-readable [storage] medium comprising instructions which, when executed by a computer, cause the computer to carry out [the steps ofJ the of the methods described herein.

## Detailed Description

The electronic structure problem consists of finding the electronic ground state, that is, the eigenstate associated with the lowest energy of an electronic Hamiltonian (herein variants of the configuration interaction Hamiltonian) at a fixed molecular geometry. The electron configuration of the molecule is determined by the number of electrons, the charge and the spin-multiplicity. Once represented in a basis of optimized spin-orbitals, as obtained from a Hartree-Fock calculations performed for a set of atom-centered basis functions, reductions on the Configuration Interaction (CI) expansion can be performed by applying active spaces and / or truncations on the allowed excited reference states, so-called Slater determinants. The electronic structure problem is herein solved within the Born-Oppenheimer approximation, that is, the exact coupled electron-nuclei wavefunction is approximated by a single product of a nuclei wavefunction (a function that only depends on the nuclei degrees of freedom) and an electronic wavefunction, which depends on the electronic degrees of freedom, but is parameterized in the nuclei coordinates.

The complete CI Hamiltonian (target or molecular Hamiltonian) in second quantization describing the molecule assumes the general form

$$H_{mol} = \sum_{pq} h_{pq} \hat{a}_p^\dagger \hat{a}_q + \frac{1}{2} \sum_{pqrs} h_{pqrs} \hat{a}_p^\dagger \hat{a}_q^\dagger \hat{a}_r \hat{a}_s \quad (1)$$

wherein $h_{pq}$ are the single-body integrals and $h_{pqrs}$ are the two-body integrals. The single-body integrals are expectation values of the one body operators (kinetic energy of electrons and Coulomb potential energy of interaction between electrons and the nuclei) with respect to the electronic wavefunctions given the fixed geometry of the molecule. The two-body integrals are expectation values of the two-body operators (Coulomb interaction between electrons) with respect to the electronic wavefunctions given the fixed geometry of the molecule. Furthermore, the indices $p,q,r,s$ are spin-orbital indices that run over electronically occupied and unoccupied spin-orbitals.

The molecular Hamiltonian which is the target Hamiltonian can be built, for example, using standard open-source libraries existing in Python, such as Qiskit and PySCF.

Digitized counterdiabatic quantum computing (DCQC) is a framework whose origin comes from adiabatic quantum computing, where one starts from a Hamiltonian which has a trivial ground state and evolves the system towards a Hamiltonian which has the solution of the computation problem as its ground state. This framework can lead to a large number of quantum gates if the molecules are large, which might be unfeasible in current quantum hardware. This problem can be addressed by making DCQC a hybrid approach, i.e. Hybrid-DCQC where the set of quantum gates is reduced and a classical computer is introduced to work as a classical optimizer. Therefore, this invention is part of the general framework of the variational quantum eigensolver.

In one aspect, the invention refers to a method, in particular a computer-implemented method, for solving an electronic structure problem as described above and herein.

The variational quantum eigensolver (VQE) is an algorithm used to find the lowest energy and the associated state of a quantum system described by a Hamiltonian. It is based on the variational principle.

The variational principle states that given a trial parametrized state called ansatz, an estimation of the ground state can be done by finding the optimal parameters that minimize the expectation value of the Hamiltonian with respect to the trial state, this expectation value - also called energy functional - is larger than or equal to the exact energy.

An expectation value is the mean value obtained after an experimental measure of a physical quantity several times in a quantum experiment.

Then, the VQE needs to accomplish two main tasks:

- evaluating expectation values with respect to the trial state and
- optimizing parameters.

The first task is done by a quantum computer, the ansatz is prepared by a set of parametrized generators and the expectation value is obtained through measurements.

The second task is done by a classical optimizer, which takes in the expectation value of the Hamiltonian and updates the parameters $\alpha_i$ according to the gradients $\frac{dE}{d\alpha_i}$, giving place to the next expectation value evaluation. The cycle is repeated until the optimizer meets energy convergence within a certain user-defined energy variance.

The VQE can be used to solve electronic structure problems, there are several approaches to build the ansatz. The ansatz commonly used for solving the electronic structure problem are made of basic building blocks called entanglers, each entangler is a time-evolution operator, in which the time is a variational parameter and the operator generating the evolution is called a generator and is a Pauli product.

A Pauli product P, also known as Pauli word, Pauli String or Pauli operator, is a tensor product of Pauli matrices $\sigma = \{I, X, Y, Z\}$, namely $P = \sigma_1 \otimes \sigma_2 \otimes \cdots \otimes \sigma_n$ where $n$ is the number of qubits required to represent the electronic structure problem to be solved in a quantum computer.

The ansatz, which refers to as U is built as a product of a certain number of parameterized entanglers,

$$U = \prod_k e^{i\alpha_k P_k}$$

wherein $\alpha_k$ are called the variational parameters. Several techniques have been developed how to choose the generators $P_k$ for the ansatz, for example:

- Unitary coupled cluster singles doubles (UCCSD), which builds the ansatz by first selecting the possible single and double fermionic excitation operators and then mapping them to the qubit space through a fermion-to-qubit mapping, resulting in a product of parameterized entanglers.

- Qubit coupled cluster (QCC), which considers all possible Pauli operators and selects the generators to be included in the ansatz by computing the first and second derivatives of the energy functional with respect to the variational parameter associated to every Pauli operator. The selected generators are those with either highest first derivative or vanishing first derivative and large negative second derivative.

- iterative qubit coupled cluster (iQCC), which systematically grows the ansatz at each iteration. At the first iteration, the Hamiltonian to be studied corresponds to the molecular Hamiltonian (target Hamiltonian), from which all the generators with different energy functional derivative are sampled and then a certain number of them are chosen to perform the optimization. Once the optimizer converges, the Hamiltonian is transformed according to the entanglers evaluated at the optimal variational parameters and the process starts again until global convergence is met.

- adaptive derivative-assembled pseudo-trotter ansatz variational quantum eigensolver (ADAPT-VQE), which systematically grows the ansatz at each iteration. At the first iteration, the Hamiltonian to be studied corresponds to the molecular Hamiltonian (target Hamiltonian). Then, a pool of generators consisting of the possible single and double fermionic excitations is considered. The elements of this pool are ranked and chosen according to the energy functional first derivative. Next, the selected excitations are mapped to the qubit space through a qubit-to-fermion mapping, resulting in a product of parametrized entanglers and optimization is done. Once the optimizer converges, the Hamiltonian is transformed according to the entanglers evaluated at the optimal variational parameters and the process starts again until global convergence is met.

- qubit-adaptive derivative-assembled pseudo-trotter ansatz variational quantum eigensolver (q-ADAPT-VQE), which systematically grows the ansatz at each iteration. At the first iteration, the Hamiltonian to be studied corresponds to the molecular Hamiltonian (target Hamiltonian). Then, a pool of generators consisting of all Pauli operators but those containing the Z Pauli matrix is considered. The elements of this pool are ranked and chosen according to the energy functional first derivative and optimization is performed. Once the optimizer converges, the Hamiltonian is transformed according to the entanglers evaluated at the optimal variational parameters and the process starts again until global convergence is met.

All the methods mentioned above, as well as the method presented in this description, aim to solve the electronic structure problem on noisy intermediate-scale quantum (NISQ) devices.

The Hybrid-DCQC of the invention is connected to the counterdiabatic (CD) protocols for adiabatic quantum computing. Adiabatic quantum computing is based on adiabatic quantum evolution, where a system starts at an initial Hamiltonian $H_i$ with trivial ground state and is then driven to a final Hamiltonian $H_f$ (also referred to here as problem Hamiltonian), which encodes the problem to be solved. Then, the Hamiltonian governing the system is $H_{ad} = (1 - \lambda(t))H_i + \lambda(t)H_f$, which we refer to as the adiabatic Hamiltonian and $\lambda(t)$ is called the scheduling function and satisfies $\lambda(0) = 0, \lambda(1) = 1$. The details of the scheduling function are not relevant for the usage of Hybrid-DCQC, therefore not described here. If the driving is slow, the system remains at the ground state. Hence, at the end of the evolution, the solution of the problem is found. However, if the driving is fast, the system experiences transitions between different energy levels, such that at the end of the evolution, the solution of the problem is not found. In order to drive fast and suppress these transitions, a CD term $H_{CD}$ can be added.

The CD term $H_{CD}$ is a term that is added to the Hamiltonian $H_{ad}$ describing the adiabatic evolution, so that the total Hamiltonian H describes a transition-less driving between the initial Hamiltonian and the problem Hamiltonian.

In the language of qubits, a Hamiltonian $H$ is written as a sum of Pauli operators, i.e., $H = \Sigma_n c_n P_n$, wherein $c_n$ is a complex-valued coefficient. Therefore, the CD term is also written in this form, namely $H_{CD} = c_1 P_1 + \cdots + c_M P_M$ where $M$ is the number of different Pauli products whose coefficients are different than zero. This introduces the notion of a pool of generators, called the Hybrid-DCQC pool, given explicitly by the set $\{P_1, \cdots, P_M\}$.

The Hybrid-DCQC pool can be used as a pool of generators to build an ansatz aimed to solve the electronic structure problem. The details about how the pool is generated are described next.

The CD term can be approached up to an order $\ell$ in terms of only the adiabatic Hamiltonian by using the following expression:

$$H_{CD}^{(\ell)} = i\dot{\lambda}(t) \sum_{k=1}^{\ell} \alpha_k O_{2k-1}$$

$$O_{2k-1} = \underbrace{[H_{ad}, \cdots, [H_{ad}, \partial_\lambda H_{ad}], \cdots]}_{2k-1}$$

wherein is referred to as the (2k - 1)-th order nested commutator, $\dot{\lambda}(t)$ is the time derivative of the scheduling function and $\alpha_k$ coefficients that can be found systematically but are not relevant for Hybrid-DCQC, then this procedure is not included in this description. The use of nested commutators provides an advantage, since they define the pool of generators containing the generators that are used to build the ansatz to solve the electronic structure problem, namely, the possible pools can be built in the framework of Hybrid-DCQC are

- 
  $$\ell = 1$$

  The pool is given by the Pauli operators contained in $O_1 = [H_{ad}, \partial_\lambda H_{ad}]$

- 
  $$\ell = 2$$

  The pool is given by the Pauli operators contained in $O_1 = [H_{ad}, \partial_\lambda H_{ad}]$ and $O_3 = [H_{ad}, O_1]$

- The pattern is generalized for any order $\ell$, where $\ell$ can assume a system-specific maximum value $N_\ell$

For the example embodiments illustrated here, the order is taken to be 1. However, the order may also be higher than 1, as described.

As mentioned before, a pure quantum DCQC approach for the electronic structure problem results in a large number of gates coming from the nested commutators. Nevertheless, the number of generators in the Hybrid-DCQC pool is the same as the number of operators in the CD term used in DCQC. Therefore, an additional step of classical pre-processing is required to select the generator from the pool which are most suitable for the treatment of the problem. The chosen criterion is the energy functional first derivative of the generator.

The energy functional first derivative criterion follows the reasoning that if the energy functional is highly modified after small changes in the variational parameter associated to the generator, then that generator is a good choice to perform optimization and lower the energy functional faster in order to get the best estimation of the ground state.

At the mathematical level, the expectation value of the energy functional E with respect to the trial function is

$$E = \langle \psi(\alpha)|H|\psi(\alpha)\rangle$$

wherein the trial state $|\psi(\alpha)\rangle$ is prepared by the circuit ansatz $U(\alpha)$ as $|\psi(\alpha)\rangle = U(\alpha)|\psi_0\rangle$ with $|\psi_0\rangle$ is a reference state, here exemplarily taken to be the Hartree-Fock ground state $|HF\rangle$.

The Hartree-Fock operator in second quantized form reads as follows:

$$H_{HF} = \sum_{ii} h_{ii}\hat{a}_i^\dagger \hat{a}_i + \frac{1}{2}\sum_{ij}(h_{ijji}\hat{a}_i^\dagger \hat{a}_j^\dagger \hat{a}_j \hat{a}_i + h_{ijij}\hat{a}_i^\dagger \hat{a}_j^\dagger \hat{a}_i \hat{a}_j)$$

which is also referred to as the Fock operator. The indices $i, j$ are indices for occupied spin orbitals.

Preparing the Hartree-Fock state $|HF\rangle$ is an easy task for a quantum computer, since it consists of a single state in the computational basis. Therefore, $H_{HF}$ is taken to be the initial Hamiltonian $H_i$ whereas the molecular Hamiltonian (target Hamiltonian) $H_{mol}$ is taken to be the final Hamiltonian $H_f$. The pool of generators is then easily obtained by computing nested commutators between the Fock operator and the molecular Hamiltonian (target Hamiltonian), as described above.

The first derivative of the energy functional with respect to the variational parameter $\alpha_k$ associated to the generator $P_k$, also referred to herein as derivative criterion, is given by

$$\frac{dE}{d\alpha_k} = \langle HF|[H, P_k]|HF\rangle$$

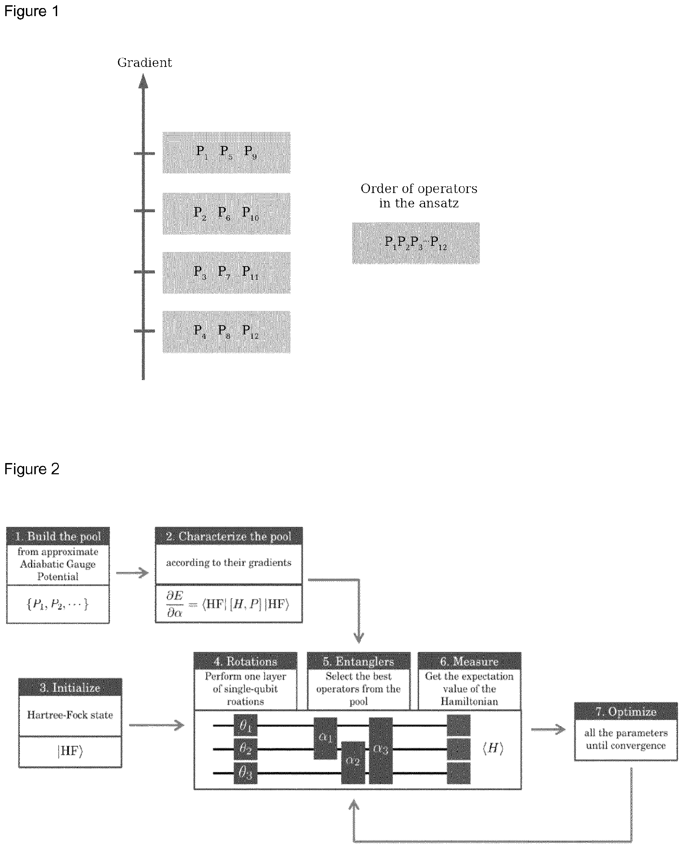

This expectation value must be evaluated for all the generators in the Hybrid-DCQC pool, and the result is a set of different derivative values, each containing a set of generators as shown in Figure 1. The generators are selected according to an energy derivative criterion. For example, in certain embodiments, the operator with the highest derivative is put first in list for the ansatz, the second highest derivative goes on the second place, and so on. Once the last derivative value (chosen to be larger than a user-defined threshold) is reached, the process starts over again by picking a new operator from the group with largest associated energy derivative.

Once a certain user-defined number of generators is selected from the pool, the Hybrid-DCQC ansatz is built to contain two main blocks. The first one consists of a layer of parametrized single-qubit rotations, which can either be put at the beginning or at the end of the ansatz. The variational parameters of the single-qubit rotations are here denoted by $\theta$. The second block consists of the parametrized entanglers built from the generators chosen from the Hybrid-DCQC pool. The variational parameters of the entanglers are here denoted by to be called $\alpha$. This is described in the steps 4 and 5 of Figure 2.

A common indicator used to account for the precision of the method is the energy difference (also called energy error) between the converged energy of the method and the energy obtained from an exact diagonalization of the final Hamiltonian. An accurate result is achieved when the energy error obeys chemical accuracy, that is, is not larger than 1 kcal/mol = $1.6 \cdot 10^{-3}$ Hartree.

In a first aspect, the invention relates to a computer-implemented method for finding the ground state of a molecule with a quantum processor by using a quantum-classical Variational Quantum Eigensolver (VQE) method with the ground state corresponding to a Hamiltonian of the molecule,

the quantum processor comprising a predetermined quantum circuit for producing trial quantum states used to evaluate the expectation value of the target Hamiltonian operator, said predetermined quantum circuit comprising at least parametric quantum gates associated with one or more parameters to be optimized,
the method comprising:
providing an initial and final Hamilton operator, building up a pool of generators to construct an Ansatz of parametrized entanglers for the quantum circuit, and

- applying the quantum-classical VQE method to optimize the values of the parameters for finding the ground state of the Hamiltonian or a state with sufficient overlap with the true ground state. An overlap is considered to be sufficient if chemical accuracy is achieved.

In certain embodiments of the method, the provided Hamiltonian operator is represented in an atom-centered basis. The term atom-centered basis may be a STO-3G basis set.

In certain embodiments of the method of the invention, the step of applying the quantum-classical VQE method is an iterative scheme in which the quantum processor is used in conjunction with a classical processor,

the quantum processor preparing a trial quantum state for the initial Hamilton operator and performing measurements representative of the energy associated with the final Hamilton operator for the ground state, and

the classical processor updating values of the parameters of the parametric quantum gates of the predetermined quantum circuit based on the measurements performed by the quantum processor, the iterative scheme being executed until a predefined stopping criterion is satisfied, the quantum-classical VQE method returning the optimized values of the parameters.

In certain embodiments of the method if the invention, the quantum-classical VQE computes a pool of generators. This also allows to apply different selection criteria other than gradient selection.

In certain embodiments of the method if the invention, the generators in the pool comprise generators with Z-Gates. Z gates are defined as the usual Pauli Z-matrix.

In certain embodiments of the method if the invention, a subset of generators used for the Ansatz are selected from the pre-computed pool of generators according to the nested commutator. The selection is based on the following parameters: energy $E$ and parameters $\alpha_i$.

In certain embodiments of the method if the invention, the Hamiltonian operator representing an energy of a molecule at a particular molecular geometry, the optimal quantum state corresponding to the eigenstate associated with the lowest eigenvalue.

In certain embodiments of the method if the invention, the molecule can be any molecule. In certain embodiments, the molecule is selected from the group consisting of $H_2$, LiH, $BeH_2$, or NaH.

In certain embodiments of the method if the invention, the number of qubits in the predetermined quantum circuit corresponds to a number of spin-orbitals used to describe the molecule.

In certain embodiments of the method if the invention, the predefined stopping criterion is a maximum number of iterations and/or the change of the energy associated with the parameterized wavefunction of two or more consecutive iterations.

The number of iterations, for example, may be between 10 and 150, in particular between 70 and 100. The change of the energy associated with the parameterized wavefunction may, for example, be limited by $10^{-5}$ Hartree. The term "two or more consecutive iterations" means that the energy associated with the parameterized wavefunction is compared of at least two consecutive iterations, but possibly more, such as three, four, five or more, but usually not of more than 5.

In certain embodiments of the method if the invention, the parametric quantum gates comprise rotation quantum gates, and the parameters associated with said rotation quantum gates comprise values of angles.

In a second aspect, the invention refers to a method for determining a quantum state of a molecule. This aspect comprises a method for finding an optimal quantum state minimizing the energy associated with a Hamiltonian operator with a quantum processor as described herein, wherein an expectation value of the Hamiltonian operator over a given quantum state corresponds to the energy of said quantum state.

In a third aspect, the invention refers to a method for determining a physical property of a material comprising a method for finding an optimal quantum state by minimizing the energy associated with a Hamiltonian operator with a quantum processor as described herein.

In a fourth aspect, the invention refers to the use of a hybrid quantum-classical variational quantum eigensolver (VQE) for finding the electronic ground state wavefunction for a given molecular electronic Hamiltonian and determining the associated ground state energy.

In a fifth aspect, the invention refers to a method for providing a hybrid quantum-classical variational quantum eigensolver (VQE), comprising the following steps:

a. building a pool of generators from a nested commutator, comprising

calculating a Hartree-Fock operator for a given molecular Hamiltonian (target Hamiltonian) using a classical computer which yields an initial Hamiltonian, and

obtaining a plurality of counter-diabatic (CD) terms by using a nested commutator method to obtain a pool of generators operators,

b. characterizing the pool of generators by ranking the operators generators according to their associated first derivative of the energy functional, where the Hartree-Fock state is used as a reference state in the expectation values,

c. preparing a Hartree-Fock state,

d. optionally, providing a layer of parametrized single qubit rotations as a first block of the ansatz,

e. providing a layer of parametrized entanglers in accordance with the generators selected from the pool of generators, which are taken to be the best with respect to the derivative criterion as the second block of the ansatz,

f. computing the expectation value of the Hamiltonian, wherein the optimized parameters are iteratively obtained by performing several variational quantum eigensolver (VQE) cycles, and

g. using a classical computer as a classical optimizer to update the parameters and returning to step d. with the updated parameters.

Although CD terms of any order till the exact expansion can be included in the pool of generators and the Ansatz, in certain embodiments of the method of the invention, the pool built from the nested commutator in step a. is a-pool of generators obtained from the first order nested commutator according to $[H_{HF},H_{mol}]$.

In another aspect, the invention refers to the use of a hybrid quantum-classical variational quantum eigensolver (VQE) to find the electronic ground state wavefunction for a given molecular electronic Hamiltonian and determine the associated ground state energy.

This invention can be summarized in the following items, shown in Figure 2, which must be followed to approach an instance of the electronic structure problem:

1. Build the pool of generators from nested commutators, e.g., the pool obtained from the first order nested commutator is $[H_{HF},H_{mol}]$.

2. Characterize the pool by ranking the generators according to their associated first derivative of the energy functional, where the Hartree-Fock state is used as a reference state in the expectation values.

3. Prepare the Hartree-Fock state.

4. Build the first block of the ansatz, which is a layer of parametrized single qubit rotations.

5. Build the second block of the ansatz, which is a layer of parametrized entanglers in accordance with the generators selected from the pool, which are taken to be the best with respect to the derivative criterion.

6. Compute the expectation value of the Hamiltonian and its energy gradients with respect to the variational parameters. This step is standard from a VQE scheme.

7. Use a classical computer as a classical optimizer to update the parameters and start over at the step 4 with the updated parameters.

In certain embodiments of the method of the invention, the way the pool of generators is built is unique:

- UCCSD is inspired from the classical method coupled cluster singles doubles (CCSD) whereas Hybrid-DCQC is inspired from DCQC. Furthermore, the pool of generators from UCCSD is initially in the fermionic space whereas the Hybrid-DCQC pool is in the qubit space.

- QCC considers the pool to be all the possible Pauli operators whereas the Hybrid-DCQC pool is more restricted, since it is built from nested commutators, which for low orders cannot sample all the possible Pauli operators.

- iQCC is an iterative approach that runs an optimization per iteration whereas Hybrid-DCQC performs only one optimization. Furthermore, iQCC pool does not include generators containing Pauli matrices Z, whereas generators containing such Pauli matrices naturally appear in the method used in Hybrid-DCQC to build the pool.

- ADAPT-VQE is an iterative approach that runs an optimization per iteration whereas Hybrid-DCQC performs only one optimization. Besides, the pools of generators considered in ADAPT-VQE are fermionic excitations whereas Hybrid-DCQC pool is directly built in the fermionic space.

- q-ADAPT-VQE is an iterative approach that runs an optimization per iteration whereas Hybrid-DCQC performs only one optimization. Additionally, the q-ADAPT-VQE pool considers all possible Pauli operators but those containing Pauli matrices $Z$, whereas generators containing such Pauli matrices naturally appear in the method used in Hybrid-DCQC to build the pool.

**Figures**

The figures show:

**Figure 1** An embodiment scheme to choose the generators from the hybrid digitized counterdiabatic quantum computing (Hybrid-DCQC) pool once it has been characterized according to the first derivative of the energy functional.

**Figure 2:** A scheme of an embodiment of the Hybrid-DCQC method used for solving electronic structure problems. Each of the steps described below is represented by a box of the figure 2.

Step 1: Building a pool of generators from nested commutators, e.g., a pool obtained from the first order nested commutator is $[H_{HF}, H_{mol}]$. In certain embodiment of the invention, the nested commutators define the pool of generators from which typically a reduced number of generators are selected to build the ansatz in order to solve the electronic structure problem.

Step 2: Characterizing the pool of generators according to their gradients by ranking the operators according to their associated first derivative of the energy functional, where the Hartree-Fock state is used as a reference state in the expectation values.

Step 3: Preparing and initializing the Hartree-Fock state.

Step 4: Build the first block of the ansatz, which is a layer of parametrized single qubit rotations. Performing one layer of single qubit rotations.

Step 5: Build the second block of the ansatz, which is a layer of parametrized entanglers in accordance with the generators selected from the pool, which are taken to be the best with respect to the derivative criterion. Selecting the best operators from the pool.

Step 6: Measuring / computing the expectation value of the Hamiltonian. The optimized parameters are iteratively obtained by performing several variational quantum eigensolver (VQE) cycles. This step follows a standard VQE scheme.

Step 7: Optimizing all the parameters until convergence. Using a classical (i.e. non-quantum) computer as a classical optimizer to update all the parameters in question and start over at the step 4 with the updated parameters.

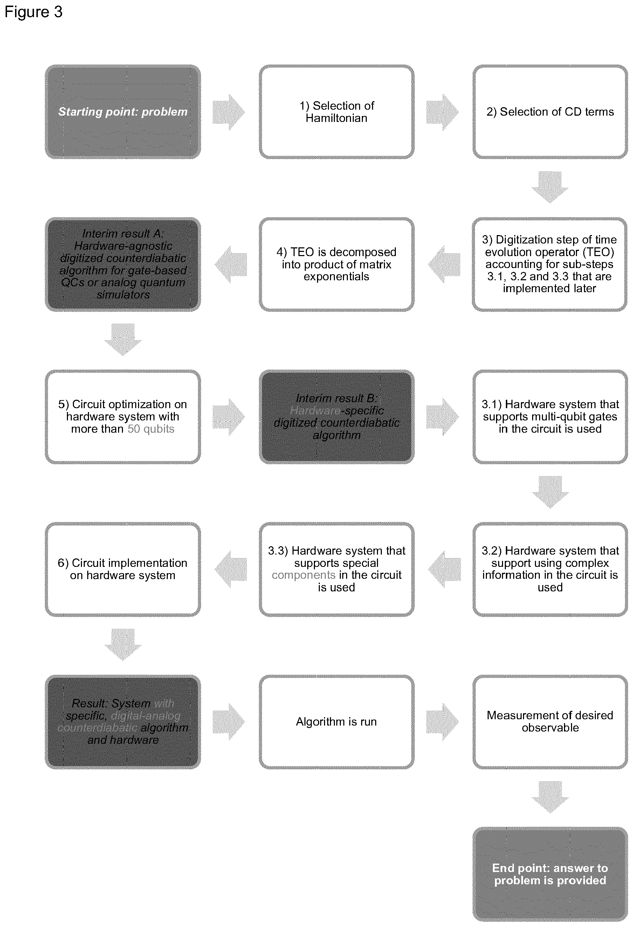

Figure 3: Flow diagram describing an embodiment of the invention.

Figure 4: Diagram describing an embodiment of the invention.

**Examples**

In the following examples, the geometry, basis sets used to compute the one and two-body integrals, the charge and the spin multiplicity are specified for different molecules using PySCF Qiskit in order to obtain the initial Hamiltonian (Hartree-Fock operator) in a 2-local qubit representation and the target Hamiltonian (a CI Hamiltonian) in k-local qubit representation.

**H$_2$ molecule**

- • Geometry: H 0 0 0; H 0 0 d, where d is the inter-atomic distance.
- • Basis: sto-3g.
- • Charge: 0.
- • Spin: 0.
- • Fermion-to-qubit mapper: Parity with two-qubit reduction.
- • Number of qubits: 2.

As a particular instance, the following was considered

- - Inter-atomic distance: 0.75 Angstrom
- - Generators: XY
- - Initial values of the parameters: $\theta_1$ = .001; $\theta_2$ = 0.001; $\alpha_1$ = 0.001
- - Optimal parameters: [ 3.95462328e-06, -5.32984051e-06, 2.29661407e-01]
- - Exact energy: -1.1371170673457307 Hartree
- - Hybrid-DCQC energy: -1.1371170673263125 Hartree
- - Error: 1.9418244789903838e-11 Hartree

**LiH molecule**

- • Geometry: Li 0 0 0; H 0 0 d, where d is the inter-atomic distance.
- • Basis: sto-3g.
- • Charge: 0.
- • Spin: 0.
- • Fermion-to-qubit mapper: Parity with two-qubit reduction.
- • Frozen core and reduced active space are considered.
- • Number of qubits: 4.

As a particular instance, we consider

- - Interatomic distance: 1.6 Angstrom
- - Generators: XXXY, ZXXY, XXZY, ZXZY
- - Initial values of the parameters: $\theta_1 = \theta_2 = \theta_3 = \theta_4 = \alpha_1 = \alpha_2 = \alpha_3 = \alpha_4$ = 0.001
- - Optimal parameters: [0.02015437, 0.06012187, -0.01786323, -0.05652078, 0.23003148, -0.12259434, 0.1203714, -0.07551619]
- - Exact energy: -7.8810720440310815 Hartree
- - Hybrid-DCQC energy: -7.880990422560092 Hartree
- - Error: 8.162147098911277e-05 Hartree

**NaH molecule**

- • Geometry: Na 0 0 0; H 0 0 d, where d is the inter-atomic distance.
- • Basis: sto-3g.
- • Charge: 0.
- • Spin: 0.
- • Fermion-to-qubit mapper: Parity with two-qubit reduction.
- • Frozen core is considered.
- • Number of qubits: 8.

As a particular instance, we consider

- Inter-atomic distance: 1.75 Angstrom
- Generators: XXXXXXXY, IIZXXXXY, XXXXIIZY, IIZXIIZY, ZXXXZXXY, IZXXIZXY
- Initial values of the parameters: $\theta_1 = \theta_2 = \theta_3 = \theta_4 = \theta_5 = \theta_6 = \theta_7 = \theta_8 = \alpha_1 = \alpha_2 = \alpha_3 = \alpha_4 = \alpha_5 = \alpha_6 = 0.001$
- Optimal parameters: [-1.12559690e-06, 1.47973124e-06, 2.14345273e-06, 5.32524703e-02, 3.90990945e-06, -6.74062592e-06, 1.96077494e-06,-6.42974522e-02, 1.06848299e-01, 9.53960563e-02, -9.72100290e-02,-1.10792365e-01, -1.24440412e-02, -1.24399301e-02]
- Exact energy: -160.3256347524127 Hartree
- Hybrid-DCQC energy: -160.32532910981 Hartree
- Error: 0.000305642602683065 Hartree

## BeH$_2$ molecule

- Geometry: H 0 0 -d; Be 0 0 0; H 0 0 d, where d is the inter-atomic distance.
- Basis: sto-3g.
- Charge: 0.
- Spin: 0.
- Fermion-to-qubit mapper: Parity with two-qubit reduction.
- Number of qubits: 10.

As a particular instance, we consider

- Inter-atomic distance: 1.3 Angstrom
- Generators: ZXXXZZXXYI, XXXXZXXXYI, ZXXXXZXXXY, ZXXXXXXYI, XXXXZZXXXY, XXXXXZXXYI, ZXXXZXXXXY, XXXXXXXXXY, IIZXXIIZXY, IZXXXIZXXY, IIZXZIIZYI, IZXXZIZXYI, IIIIIYIIIX, YIIIXIIIII
- Initial values of the parameters: $\theta_1 = \theta_2 = \theta_3 = \theta_4 = \theta_5 = \theta_6 = \theta_7 = \theta_8 = \theta_9 = \theta_{10} = \alpha_1 = \alpha_2 = \alpha_3 = \alpha_4 = \alpha_5 = \alpha_6 = \alpha_7 = \alpha_8 = \alpha_9 = \alpha_{10} = \alpha_{11} = \alpha_{12} = \alpha_{13} = \alpha_{14} = 0.001$
- Optimal parameters: [ 8.13855540e-07, 1.16535747e-06, 1.32529054e-06, 4.88703182e-05, 1.30247828e-06, 1.47531975e-06, 1.34068879e-06, 1.32128508e-06, 4.72134560e-05, 1.76975705e-06, 1.47200186e-01, 7.78741587e-02, 1.14163024e-01, 9.35692537e-02, 9.37256948e-02, 8.23345533e-02, 8.22067242e-02, 5.42330537e-02, 1.01521034e-01, 1.01521194e-01, 5.41739761e-03, 5.41730253e-03, -1.21318260e-02,-1.06835110e-02]
- Exact energy: -15.59471015712045 Hartree
- Hybrid-DCQC energy: -15.593944174283708 Hartree
- Error: 0.0007659828367412302 Hartree

## Claims

1. Computer-implemented method for finding the ground state of a molecule with a quantum processor by using a quantum-classical Variational Quantum Eigensolver (VQE) method with the ground state corresponding to a target Hamiltonian of the molecule,

   the quantum processor comprising a predetermined quantum circuit for producing trial quantum states for the target Hamiltonian operator, the predetermined quantum circuit comprising parametric quantum gates associated with one or more parameters to be optimized,
   the method comprising:

   - providing an initial Hamiltonian operator,
   - computing a pool of generators to construct parametrized entanglers for the quantum circuit, and
   - applying the quantum-classical VQE method to optimize the values of the parameters of the entanglers for finding the target Hamiltonian representing the ground state of the molecule.

2. Method according to claim 1, wherein the provided initial Hamiltonian operator is represented in an atom-centered basis.

3. Method according to claim 1 or 2, wherein the step of applying the quantum-classical VQE method is part of an iterative scheme in which the quantum processor is used in conjunction with a classical processor,

> the quantum processor preparing a trial quantum state for the target Hamiltonian operator and performing measurements representative of the energy associated with the target Hamiltonian operator for said trial quantum state, and
> the classical processor updating values of the parameters of the parametric quantum gates of the predetermined quantum circuit based on the measurements performed by the quantum processor, the iterative scheme being executed until a predefined stopping criterion is satisfied, the quantum-classical VQE method returning the optimized values of the parameters.

4.  Method according to any of claims 1 to 3, wherein the predefined stopping criterion is a maximum number of iterations and/or a change of the energy associated with a parameterized wavefunction of two or more consecutive iterations.

5.  Method according to any of claims 1 to 4, wherein the parametric quantum gates comprise rotation quantum gates, and wherein the parameters associated with said rotation quantum gates comprise values of angles.

6.  Method according to any of claims 1 to 5, wherein the quantum-classical VQE computes a pool of generators comprising generators with Z-Gates.

7.  Method according to any one of claims 1 to 6, wherein the generators are selected using a gradient method wherein a gradient of an energy functional in reference state representation is computed with respect to the variational parameter from the computed pool of generators.

8.  Method according to any of claims 1 to 5, wherein the target Hamiltonian operator represents an energy or expectation value of the ground state of the molecule, the optimal quantum state corresponding to the eigenvector associated with the lowest eigenvalue.

9.  Method according to any of claims 1 to 8, wherein the predetermined quantum circuit comprises a plurality of qubits, wherein the number of qubits in the predetermined quantum circuit corresponds to a number of spin orbitals used to describe the molecule.

10. Use of a method according to any of claims 1 to 9 for determining a physical property of a material, in particular wherein the physical property is selected from the group consisting of magnetic properties, electrical properties and optical properties.

11. Computer-implemented method for providing a hybrid quantum-classical Variational Quantum Eigensolver (VQE), comprising the following steps:

> a. building a pool of generators from a nested commutator, comprising

> > calculating a Hartree-Fock operator for a given molecular Hamiltonian (target Hamiltonian) using a classical computer which yields an initial Hamiltonian, and
> > obtaining a plurality of counterdiabatic (CD) terms using a nested commutator method to obtain a pool of generators,

> b. ranking the generators of the pool of generators according to their associated first derivative of the energy functional,
> c. preparing a Hartree-Fock state as a reference for the ranking of the generators of step b.,
> d. providing a plurality of parametrized single qubit rotations as a first block,
> e. providing a plurality of parametrized entanglers in accordance with the generators selected from the pool of generators, which have the largest absolute value of the energy gradient with respect to a derivative criterion as a second block,
> f. computing the expectation value of the Hamiltonian, wherein the optimized parameters are iteratively obtained by performing several Variational Quantum Eigensolver (VQE) cycles, and
> g. using a classical computer as an optimizer to update the parameters and returning to step d. with the updated parameters until a stop criterion is reached.

12. Method of claim 11, wherein the pool of generators built from the nested commutator in step a. is pool of generators obtained from the first order nested commutator according to $[H_{HF}, H_{mol}]$.

13. A data processing apparatus/device/system comprising a processor adapted to perform the steps of the method of any of claims 1 to 9 or 11 to 12.

14. A computer program [product] comprising instructions which, when the program is executed by a computer, cause the computer to carry out [the steps of] the method of any of claims 1 to 9 or 11 to 12.

15. A computer-readable [storage] medium comprising instructions which, when executed by a computer, cause the computer to carry out [the steps of] the method of any of claims 1 to 9 or 11 to 12.

Figure 1

Figure 2

Figure 3

Figure 4

| | Europäisches Patentamt<br>European Patent Office<br>Office européen des brevets | **EUROPEAN SEARCH REPORT** | Application Number<br>EP 23 21 1844 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STUART M HARWOOD ET AL: "Improving the variational quantum eigensolver using variational adiabatic quantum computing", ARXIV.ORG, CORNELL UNIVERSITY LIBRARY, 201 OLIN LIBRARY CORNELL UNIVERSITY ITHACA, NY 14853, 16 August 2021 (2021-08-16), XP091024390, * the whole document * | 1-15 | INV.<br>G06N10/60 |
| A | GARCIA-SAEZ A ET AL: "Addressing hard classical problems with Adiabatically Assisted Variational Quantum Eigensolvers", ARXIV.ORG, CORNELL UNIVERSITY LIBRARY, 201 OLIN LIBRARY CORNELL UNIVERSITY ITHACA, NY 14853, 6 June 2018 (2018-06-06), XP080887828, * Abstract, I. Introduction, II. The AAVQE algorithm * | 1-15 | |
| A | ZE ZHAN: "Experimental Determination of Electronic States via Digitized Shortcut to Adiabaticity and Sequential Digitized Adiabaticity", PHYSICAL REVIEW APPLIED, vol. 16, no. 3, 18 June 2021 (2021-06-18), XP093160059, US ISSN: 2331-7019, DOI: 10.1103/PhysRevApplied.16.034050 * Abstract, I. Introduction, II. Theory, III. Experimental realization * | 1-15 | TECHNICAL FIELDS SEARCHED (IPC)<br><br>G06N |

-/--

The present search report has been drawn up for all claims

| Place of search | Date of completion of the search | Examiner |
|---|---|---|
| The Hague | 10 May 2024 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

## EUROPEAN SEARCH REPORT

Application Number

EP 23 21 1844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHUNJI MATSUURA: "VanQver: the variational and adiabatically navigated quantum eigensolver", NEW JOURNAL OF PHYSICS, vol. 22, no. 5, 15 March 2019 (2019-03-15), page 053023, XP093160027, GB ISSN: 1367-2630, DOI: 10.1088/1367-2630/ab8080 * Abstract, I. Introduction, II. The variational and adiabatically navigated quantum eigensolver, III. Molecular systems * | 1-15 | |
| A | HEGADE NARENDRA N. ET AL: "Shortcuts to Adiabaticity in Digitized Adiabatic Quantum Computing", PHYSICAL REVIEW APPLIED, vol. 15, no. 2, 9 September 2020 (2020-09-09), XP093139605, US ISSN: 2331-7019, DOI: 10.1103/PhysRevApplied.15.024038 * Abstract, I. Introduction, II. Single spin system, III. Local counter-diabatic driving, IV. Approximate counter-diabatic driving * | 1-15 | TECHNICAL FIELDS SEARCHED (IPC) |

The present search report has been drawn up for all claims

| Place of search | Date of completion of the search | Examiner |
|---|---|---|
| The Hague | 10 May 2024 | Moro Pérez, Gonzalo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2